(19) Europäisches Patentamt
European Patent Office
Office européen des brevets

(11) Publication number: **0 378 193 A2**

(12) # EUROPEAN PATENT APPLICATION

(21) Application number: 90100441.6

(22) Date of filing: 10.01.90

(51) Int. Cl.5: A01N 47/30, A01N 43/40, //(A01N47/30,43:40)

(30) Priority: 12.01.89 JP 3641/89

(43) Date of publication of application: 18.07.90 Bulletin 90/29

(84) Designated Contracting States: DE FR GB

(71) Applicant: MITSUBISHI PETROCHEMICAL CO., LTD.
5-2, Marunouchi 2-chome
Chiyoda-ku Tokyo(JP)

(72) Inventor: Kazuo, Jikihara
1307-10 Onabake-cho,Ushiku-shi
Ibaraki-ken(JP)
Inventor: Shinji, Yamagishi
7-23-11 Fukazawa, Setagaya-ku
Tokyo(JP)
Inventor: Atsushi, Go
1977-7,Osaka-cho, Ushiku-shi
Ibaraki-ken(JP)
Inventor: Kazuhiko, Konno
1126-8 Nagakuni, Tsuchiura-shi
Ibaraki-ken(JP)

(74) Representative: Kraus, Walter, Dr. et al
Patentanwälte Kraus, Weisert & Partner
Thomas-Wimmer-Ring 15
D-8000 München 22(DE)

(54) **Herbicidal composition and the use thereof.**

(57) A herbicidal compositon comprising (a) at least one 2-nitro-5-(substituted pyridyloxy)benzohydroximic acid derivative of the following formula

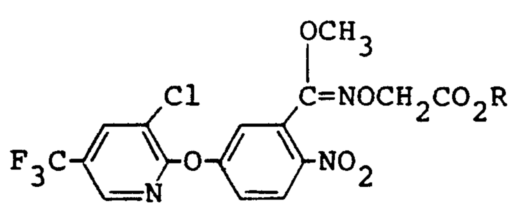

(I)

wherein R represents a lower alkyl group, and (b) at least one urea derivative selected from the group of 3-(3-chloro-4-methylphenyl)-1,1-dimethylurea and 3-(4-isopropylphenyl)-1,1-dimethylurea as active ingredients.

EP 0 378 193 A2

This invention relates to a herbicidal composition, and more specifically, to a herbicidal compositon, and more specifically, to a herbicidal composition comprising a combination of a certain novel 2-nitro-5-(substituted pyridyloxy)benzohydroximic acid derivative and a certain known urea derivative as active ingredients which has a broad herbicidal spectrum and can exhibit a sufficient herbicidal efficacy in low dosages, and to the use of the herbicidal composition.

A variety of herbicides have emerged from research and development works conducted over long years. These herbicides are now indispensable to agriculture and contributee greatly to the protection of useful crops from weeds and the increase of productivity by saving labor in agricultural operations.

It is still desired to develop herbicides which have a broad herbicidal spectrum and is effective at low dosages without giving phytotoxicity to cultivated crops. None of the conventional herbicides completely meet these desires.

For example, 3-(3-chloro-4-methylphenyl)-1,1-dimethylurea (to be referred to as "chlorotoluron"----see U. S. Patents Nos. 2,655,444 and 2,655,445) and 3-(4-isopropylphenyl)-1,1-dimethylurea (to be referred to as "isoproturon"---see German Patent No. 2,107,774) are herbicides used for soil treatment and foliar treatment of cultivated crops such as cereal grasses. It is known however that these compound have a low herbicidal efficay against weeds of Compositae, Scrophylariaceae, Labiatae, wild pansy (Viola arvensis) and bed straw (Galium aparine). In particular, in the cultivation of cereal crops, when these compounds are used in amounts which to not cause phytotoxicity to useful crops, highly problem weeds such as bed straw, ivyleaf speedwell (Veronica hederaefolia) sowthistle (Sonchus oleraceus) remain uncontrolled. This problem is important to crop production, and its solution is strongly desired.

The present inventors made extensive investigations in order to develop a herbicide which is free from the defects of the urea derivatives, has a broad herbicidal spectrum, and can exhibit a sufficient herbicidal efficacy at low dosages. Consequently, the inventors have found that a herbicide meeting the above requirements can be formed by combining such a urea derivative herbicide with a certain novel 2-nitro-5-(substituted pyridyloxy)benzohydroximic acid derivative (EP-A-0299382).

Thus, according to this invention, there is provided a herbicidal composition comprising as active ingredients

(a) at least one 2-nitro-5-(substituted pyridyloxy)benzohydroximic acid derivative of the following formula

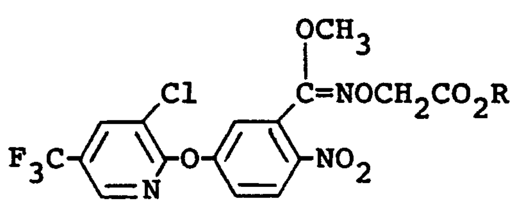

(I)

wherein R represents a lower alkyl group,

and (b) at least one urea derivative selected from the group of 3-(3-chloro-4-methylphenyl)-1,1-dimethylurea (chlorotoluron) and 3-(4-isopropylphenyl)-1,1-dimethylurea (isoproturon).

The herbicidal composition comprising a combination of the 2-nitro-5-(substituted pyridyloxy)-benzohydroximic acid derivative of formula (I) with the urea derivative has a broad herbicidal spectrum and can easily control strongly problem weeds such as Galium aparine and Veronica hederaefolia. Surprisingly, by using these compounds in combination, the herbicidal spectrum can be broadened by using each of these compounds in much lower dosages than the dosage of each used alone, and a marked synergistic effect can therefore be achieved by using both of these compounds in combination.

Thus, the compositon of this invention exhibits a synergistic herbicidal efficacy against difficult-to-control weeds such as Galium aparine and Veronica hederaefolia which are difficult to control by using the urea derivative herbicides alone, and can effectively control the above weeds without significantly causing phytotoxicity to cultivated plants. Furthermore, this invention provides an agriculturally very useful herbicide which can markedly decrease the amounts of active ingredients necessary for weed control.

The 2-nitro-5-(substituted pyridyloxy)benzohydroximic acid derivative used in the herbicidal composition of this invention is a novel compound not described in the prior literature, and its details, such as the method of its production, its properties, and its herbicidal activity, are disclosed in EP-A-0299382.

In the compound of formula (I), the lower alkyl for R may be linear or branched, and include alkyl groups of 6 or less carbon atoms, such as methyl, ethyl, n-propyl, iso-propyl, n-butyl, sec-butyl, iso-butyl, tert-butyl, n-pentyl, iso-amyl, and n-hexyl.

The compound of formula (I) may be in the form of stereoisomers (syn-type and anti-type) and optical

isomers. It should be understood that compounds of formula (I) in the form of these isomers are within the scope of the invention.

The compound of formula (I) can be produced by the following scheme.

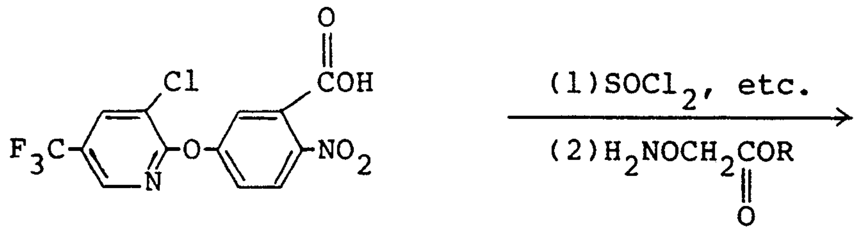


(III)

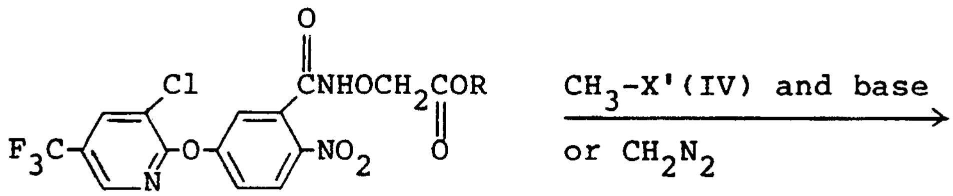


(II)

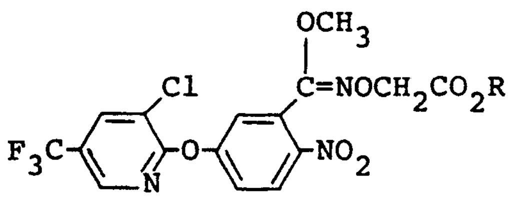

(I)

In the formulae, R is as defined with regard to formula (I); X′ represents a halogen atom or the group $-OSO_2R'$ in which R′ represents a substituted or unsubstituted alkyl, phenyl or alkoxy group, etc.

In the above process, the hydroxamic acid derivative of formula (II) can be obtained by converting the 2-nitro-5-(substituted pyridyloxy)benzoic acid in a customary manner into an acid chloride with, for example, thionyl chloride, and then reacting the acid chloride with an O-substituted hydroxylamine in, for example, an organic solvent in the presence of a base.

In this reaction, the amount of thionyl chloride to be used may be properly changed and is, for example, 1 to 10 equivalents per equivalent of the compound of formula (III). The reaction temperature can also be properly selected, and is, for example, room temperature to 80 °C. In the reaction of the resulting acid chloride with the O-substituted hydroxylamine, the amount of the O-substituted hydroxylamine can be properly varied. For example, it may be 1 to 3 equivalents. The amount of the base may also be properly selected, and may be, for example, 1 to 3 equivalents. The reaction temperature at this time may be, for example, from room temperature to 100 °C.

Examples of the solvent used include aromatic hydrocarbons such as benzene and toluene, ethers such as tetrahydrofuran and dioxane, acetone, acetonitrile, dimetylformamide, dimethylsulfoxide, and mixtures of these with water. Examples of the base are pyridine, triethylamine, sodium carbonate, potassium carbonate, and sodium hydrogen carbonate.

The benzohydroximic acid derivative of formula (I) used in the herbicidal composition of this invention may be produced by reacting the resulting O-substituted-2-nitro-5-(substituted pyridyloxy)benzohydroximic acid with an alkylating agent of formula (IV) or $CH_2N_2$ in an organic solvent in the presence or absence of a base.

The reaction may be carried out by using, for example, 1 to 3 mole equivalents, preferably 1 to 1.5 mole equivalent of the compound of formula (IV) or $CH_2N_2$ per mole of the compound of formula (II) under ice cooling to the refluxing temperature of the solvent, preferably room temperature to about 80 °C for 0.5 to 20 hours. Examples of the solvent that may be used in this reaction include organic solvents, for

example, aromatic hydrocarbons such as benzene and toluene, alcohols such as methanol and ethanol, ethers such as diethyl ether, tetrahydrofuran and dioxane, acetone, acetonitrile, dimethylformamide, dimethyl sulfoxide; and mixtures of these solvents with water.

Examples of the base that can be used in the above reaction are pyridine, triethylamine, sodium hydroxide, potassium hydroxide, sodium carbonate, potassium carbonate, sodium ethylate and sodium hydroxide. An acid acceptor may be used in an amount of 1 to 3 equivalents, preferably 1 to 1.5 equivalents, per equivalent of the compound of formula (IV). The use of the acid acceptor is preferred because the reaction can be carried out in good yields. When this reaction is carried out by using $CH_2N_2$ as the alkylating agent, it is not necessary to use a base in the reaction.

When the reaction is used in a two-phase system, it is possible to use a phase transfer catalyst, for example quaternary ammonium salt such as tetramethyl ammonium bromide, tetrabutyl ammonium bromide or benzyltributyl ammonium bromide, or a quaternary phosphonium such as tetraphenyl phosphonium bromide in an amount of, for example, 1 to 50 % by weight, preferably 5 to 30 % by weight, based on the compound of formula (IV).

After the reaction, the resulting compound of formula (I) may be isolated by, for example, pouring the reaction mixture into water, and then treating it in a customary manner, for example extraction with an organic solvent, recrystallization, or column chromatography.

The herbicidal composition of this invention contains as active ingredients at least one 2-nitro-5-(substituted pyridyloxy)benzohydroximic acid derivative of formula (I) obtained as above and at least one urea derivative selected from chlorotoluron and isoproturon.

The mixing proportions of the 2-nitro-5-(substituted pyridyloxy)benzohydroximic acid derivative of formula (I) and the urea derivative in the composition of this invention are not strictly limited, and may be varied depending upon the locus to which the final herbicidal composition is to be applied, the type of weeds to be controlled, the time of application, etc. Generally, it is suitable to mix 0.5 to 100 parts by weight, 1 to 30 parts by weight, more preferably 1 to 10 parts by weight, of the urea derivative with 1 part by weight of 2-nitro-5-(substituted pyridyloxy)benzohydroximic acid derivative.

In actually using the composition of this invention as a herbicide, the above active ingredients may be mixed with a known solid or liquid carrier or diluent, a surface-active agent and another adjuvant by known methods, and can be formulated into fomrs normally used as agricultural chemicals, for example, wettable powders, dryflowable and flowable.

Solid carriers include clays typified by kaolinite, montmorillonite, attapulgite and illite; inorganic materials such as talc, pyrophyllite, pumice, acid clay, gypsum, calcium carbonate, dolomite, diatomaceous earth, calerte, magnesium lime, apatite, zeolite, silicic anhydride and synthetic calcium silicate; organic substances of the plant origin such as soybean meal, tobacco powder, walnut powder, wheat flour, wood powder, starch and crystalline cellulose; natural or synthetic polymeric compounds such as coumarone resins, petroleum resins, alkyd resins, polyvinyl chloride, polyalkylene glycols, ketone resins, ester gum, copal gum and dammar gum; waxes such as carnauba wax and beeswax; and urea.

Suitable liquid carriers or diluents include paraffinic or naphthenic hydrocarbons such as kerosene, mineral oils, spindle oil and white oil; aromatic hydrocarbons such as toluene, xylene, ethylbenzene, cumene and methylnaphthalene; ethers such as dioxane and tetrahydrofuran; ketones such as acetone, methyl ethyl ketone, diisobutyl ketone, cyclohexanone, acetophenone and isophorone; esters such as ethyl acetate, amyl acetate, ethylene glycol acetate, diethylene glycol acetate, dibutyl maleate and diethyl succinate; alcohols such as methanol, n-hexanol, ethylene glycol, diethylene glycol, cyclohexanol and benzyl alcohol; ether alcohols such as ethylene glycol ethyl ether, ethylene glycol phenyl ether, diethylene glycol ethyl ether and di ethylene glycol butyl ether; polar solvents such as dimethyl formamide and dimethyl sulfoxide; and water.

Surface-active agents and other adjuvants may be used to emulsify, disperse, wet, spread or bind the active ingredients, adjust its disintegrability, stabilize the active ingredients of the herbicide, improve the flowability of the herbicide, prevent corrosion, or otherwise. The surface-active agents may be nonionic, anionic, cationic and amphoteric. Usually, nonionic and anionic surface-active agents are suitable. Suitable nonionic surface-active agents include, for example, polyaddition products of ethylene oxide with higher alcohols such as lauryl alcohol, stearyl alcohol and oleyl alcohol; polyaddition products of ethylene oxide with alkylphenols such as isooctylphenol and nonylphenol; polyaddition products of ethylene oxides with alkylnaphthols such as butylnaphthol and octylnaphthol; polyaddition products of ethylene oxide with higher fatty acids such as palmitic acid, stearic acid and oleic acid; polyaddition products of ethylene oxide with mono- or di-alkylphosphoric acids such as stearylphosphoric acid and dilaurylphosphoric acid; higher fatty acid esters of polyhydric alcohols such as sorbitan, and polyaddition products of ethylene oxide with these esters; and a block polyaddition product of ethylene oxide with propylene oxide. Suitable anionic surface-active agents include, for example, alkylsulfuric ester salts such as sodium laurylsulfate and oleyl sulfate amine salt; alkylsulfonic acid salts such as sodium 2-ethylhexenesulfonate; and arylsulfonic acid salts such as sodium isopropylnaphthalenesulfonate, sodium methylenebisnaphthalenesulfonate, sodium ligninsulfonate and sodium dodecylbenzenesulfonate.

To improve the properties of the formulated herbicide and increase its herbicidal effect, the compound of the invention may also be used in combination with other adjuvants including such polymeric compounds as casein, gelatin, albumin, glue, sodium alginate, ligninsulfonates, acid isopropyl phosphate (PAP), gum arabic, carboxymethyl cellulose, methyl cellulose, hydroxyethyl cellulose, polyvinyl alcohol, polyvinyl pyrrolidione and polysaccharides.

The total proportion of the active ingredients in the herbicidal composition of this invention in such various formulations vary depending upon the form of the composition. For example, the composition may contain 0.1 to 99 % by weight, preferably 1 to 80 % by weight, of the active ingredients, namely the compound of formula (I) and the urea derivative.

The wettable powder usually contains 25 to 90 % by weight of the active ingredients and the remainder being a solid carrier and a dispersing and wetting agent and optionally a protective colloid, a thixotropic agent, a defoamer, etc.

The dry flowable usually contains 25 to 90 % by weight of the active ingredients and the reminder being a solid carrier and a surface active agent.

The flowable usually contain 5 to 50 % by weight of the active ingredients, 3 to 20 parts by weight of a surface active agent, and the remainder being water. As required, a protective collolidal agent, a thickening agent, a freeze preventing agent, an antiseptic, a defoamer, etc. are added.

Other harbicides, insecticides, fungicide, plant growth regulating agents, etc. may be properly incorporated into the composition if the invention to prepare labor-saving controlling agents.

The herbicidal composition of this invention is effective for controlling a wide variety of weeds in a crop land or a non-crop land, particularly for controlling main weeds in the cultivation of cereal crops. For example, the composition of this invention can effectively control the following weeds by pre-emergence treatment (soil treatment) and by post-emergence treatment (foliar treatment). Examples of the weeds include Veronica persica Veronica hederaefolia, Stellaria media, Viola arvensis, Sonchus oleraceus, Sinapis arvensis, Lamium purpureum, Lamium amplexicaule, Galium aparine, Matricaria matricarioides, Matricaria chamomilla, Anthemis cotula, Papaver rhoeas, Cirsium arvense, Spergula arvensis, Cerastium vulgatum, Cerastium glameratum, Areharia serpyllifolia, Silene vulgaris, Erysimum cheiranthoides, Montia perfoliata, Anagallis arvensis, Myosotis arvensis, Chenopodium album, Polygonum aviculare, Polygonum convolvulus, Chrysanthemum segetum, Aphanes arvensis, Matricaria inodora, Anthemis arvensis, Legousia hybrida, Geranium molle, Geranium dissectum, Descurainea sophia, Galeopsis tetrahit, Poa annua, Avena fatua, Lolium perenne, Lolium multiflorum, Poa sphondylodes, Alopecurus myosuroides, Apera spica-venti, Phalaris paradoxa, Phalaris minor, Avena ludoviciana, and Bromus sterilis. The composition of this invention is especially suitable as a selective herbicide in an upland farm where cereal crops such as wheat, barlay and oats are usually growing. It can also be suitably used as a selective herbicide in a crop land where rice, corn, sugarcane, soybean, cotton and sunflower are growing. It can also be applicable to lawns, orchards, forest seedling farms and non-crop lands.

The suitable rate of application of the composition of this invention cannot be generalized because it may vary depending upon the climatic conditions, the soil condiitons, the formulation of the compositon, the crop to be protected, the time of application and the method of application. Usually, the rate of application, as the total amount of the active ingredients, is 0.1 to 10 kg, preferably 0.2 to 4 kg, per hectare.

The following Production Examples, Examples and Test Examples illustrate the present invention more specifically.

## PRODUCTION EXAMPLE 1

Production of methyl O-methoxycarbonylmethyl-5-(3-chloro-5-trifluoromethyl-2-pyridyloxy)-2-nitrobenzohydroximate (compound No. 1):-

36.2 g (0.10 mole) of 5-(3-chloro-5-trifluoromethyl-2-pyridyloxy)-2-nitrobenzoic acid was dissolved in 36.2 ml of thionyl chloride, and the solution was heated under reflux for 1.5 hours. The excess of thionyl chloride was evaporated to give an acid chloride.

A solution of the acid chloride in 150 ml of ether was added dropwise to a solution consisting of 10.5 g (0.1 mole) of methyl aminoxyacetate, 10.1 g (0.1 mole) of triethylamine and 300 ml of dry ether with stirring under ice cooling over the course of about 20 minutes. Thereafter, the mixture was stirred under ice cooling for 30 minutes and then at room temperature for 1.5 hours. The reaction solution was poured into 300 ml of ice water, and extracted with 200 ml of ethyl acetate three times. The organic layers were washed with a saturated aqueous solution of sodium chloride and dried over magnesium sulfate. The desiccant was separated by filtration and the solvent was evaporated. The resulting solid was recrystallized from toluene, to give 37.2 g (yield 82.7 %) of methoxycarbonylmethyl 5-(3-chloro-5-trifluoromethyl-2-pyridyloxy)-2-nitrobenzohydroxamate.

The resulting hydroxamate (37.2 g) was dissolved in a mixed solvent composed of 70 ml of ether and 70 ml of tetrahydrofuran, and with stirring under ice cooling, a solution of diaxomethane prepared from 24.8 g (0.241 mole) of N-nitrosomethylurea in 300 ml of ether was added dorpwise over about 40 minutes. The mixture was then stirred under ice cooling for about 30 minutes. The excess of diazomethane was decomposed with acetic acid, and the solvent was evaporated. The resulting solid was recrystallized from methanol to give 27.0 g (yield 70.4 %) of the desired compound No. 1 (syn-type). mp. 71.0 to 73.0 °C.

5.0 g of the above compound No. 1 was dissolved in 200 ml of toluene. The solution was bubbled with $N_2$, deaerated, and irradiated with a high-pressure mercury lamp (UVL-1009, made by Rikokagaku Sangyo) for 3 hours. The solvent was evaporated, and the residue was purified by column chromatography (silica gel; n-hexane/ethyl acetate (2:1) to give 3.5 g (yield 70.0 % of an isomer (anti-type: m.p. 84.5 - 85.5 °C)of compound No.1.

By the same procedure as above, the 2-nitro-5-(substituted pyridyloxy) benzohydorximic acid derivatives shown in the following table can be produced.

Table 1

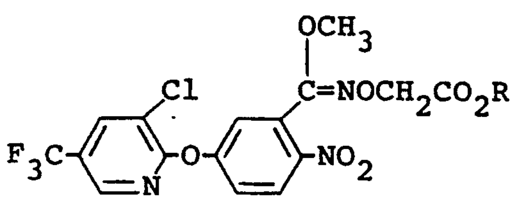

(I)

| Compound No. | R | Meting point |
|---|---|---|
| 1 | $CH_3$ | 71.0-73.0 °C (syn)<br>84.5-85.5 °C (anti) |
| 2 | $C_2H_5$ | 101.5-103.0 °C (syn)<br>58.0-59.5 °C (anti) |
| 3 | n-$C_3H_7$ | 71.5-73.1 °C (anti) |
| 4 | iso-$C_3H_7$ | 97.5-99.0 °C (anti) |
| 5 | n-$C_4H_9$ | 84.0-85.0 °C (anti) |

[Soil Treating Agents]

| EXAMPLE 1 | |
|---|---|
| Flowable:- | |
| Compound No. 2 | 30 parts by weight |
| Polyoxyethylene nonyl phenyl ether | 2 parts by weight |
| Calcium dodecylbenzenesulfonate | 2.5 parts by weight |
| Carboxymethyl cellulose | 0.5 parts by weight |
| Water | 65 parts |

The above ingredients are mixed and uniformly pulverized and mixed in a wet ball mill until the particles have a diameter of not more than 5 microns to give a flowable.

| EXAMPLE 2 | |
|---|---|
| Wettable powder:- | |
| Compound No. 2 | 5 parts by weight |
| Chlorotoluron | 60 parts by weight |
| Sodium laurylsulfate | 4 parts by weight |
| Kaolin clay | 25 parts |

The above ingredients are mixed and pulverized by a fluid energy mill to obtain a wettable powder.

| EXAMPLE 3 | |
|---|---|
| Flowable:- | |
| Compound No. 2 | 2.5 parts by weight |
| Chlorotoluron | 25 parts by weight |
| Polyoxyethylene nonyl phenyl ether | 2 parts by weght |
| Calcium dodecylbenzenesulfonate | 2.5 parts by weight |
| Carboxymethyl cellulose | 0.5 parts by weight |
| Water | 67.5 parts by weight |

The above ingredients are mixed and then pulverized and mixed in a ball mill until the particles have a diameter of not more than 5 microns to form a flowable.

| EXAMPLE 4 | |
|---|---|
| Flowable:- | |
| Compound No. 2 | 2.5 parts by weight |
| Isoproturon | 25 parts by weight |
| Polyoxyethylene nonyl phenyl ether | 2 parts by weight |
| Calcium dodecylbenzenesulfonate | 2.5 parts by weight |
| Carboxymethyl cellulose | 0.5 parts by weight |
| Water | 67.5 parts by weight |

The above ingredients are mixed and then pulverized and mixed in a ball mill until the particles have a diameter of not more than 5 microns to form a flowable.

[Soil treating tests]

TEST EXAMPLE 1

Pot test:-

Square pots, 30 cm x 30 cm x 9 cm (depth) were filled with upland farm soil, and seeds of the crops and seeds indicated in Table 2 were sown in predertermined amounts, and covered with soil to a thickness of 1 cm.

The flowable of Examples 1, 3 and 4 and commercial flowable of chlorotoluron and isoproturon were used as test chemicals, diluted with water to the amounts of active ingredients shown in Table 2, and sprayed uniformly over the surface of the soil.

On the 38th day after the treatent with the chemicals, the herbicidal efficacy on the weeds and the phytotoxity rates on the crops were evaluated in accordance with the following ratings, and the results are shown in Table 2.

| Evaluation Standard | | |
|---|---|---|
| Rating | Weed control rate (%) | Phytotoxicity rate (%) |
| 0 | 0 - 9 | 0 - 9 |
| 1 | 10 - 19 | 10 - 19 |
| 2 | 20 - 29 | 20 - 29 |
| 3 | 30 - 39 | 30 - 39 |
| 4 | 40 - 49 | 40 - 49 |
| 5 | 50 - 59 | 50 - 59 |
| 6 | 60 - 69 | 60 - 69 |
| 7 | 70 - 79 | 70 - 79 |
| 8 | 80 - 89 | 80 - 89 |
| 9 | 90 - 99 | 90 - 99 |
| 10 | 100 | 100 |

Table 2

| Test chemical | Amount of active ingredients (kg/ha) | Weed control rating A | B | C | D | E | F | G | H | I | Phytotoxicity rating J | K |
|---|---|---|---|---|---|---|---|---|---|---|---|---|
| Example | 0.025 | 0 | 6 | 6 | 6 | 7 | 8 | 0 | 0 | 6 | 0 | 0 |
| 1 | 0.05 | 3 | 8 | 7 | 8 | 10 | 9 | 5 | 3 | 7 | 0 | 0 |
| | 0.1 | 7 | 10 | 10 | 10 | 10 | 10 | 6 | 10 | 10 | 0 | 0 |
| chlorutoluron | 0.25 | 8 | 0 | 0 | 0 | 0 | 1 | 3 | 0 | 0 | 0 | 0 |
| | 0.5 | 10 | 5 | 0 | 0 | 4 | 7 | 6 | 0 | 0 | 0 | 0 |
| | 1.0 | 10 | 8 | 0 | 2 | 8 | 9 | 9 | 2 | 0 | 0 | 0 |
| isoproturon | 0.25 | 9 | 4 | 0 | 0 | 4 | 2 | 5 | 0 | 0 | 0 | 0 |
| | 0.5 | 10 | 6 | 0 | 0 | 5 | 7 | 7 | 0 | 0 | 0 | 0 |
| | 1.0 | 10 | 9 | 2 | 1 | 7 | 8 | 10 | 5 | 0 | 0 | 0 |
| Compound | 0.025 + 0.25 | 9 | 8 | 8 | 7 | 9 | 10 | 7 | 8 | 7 | 0 | 0 |
| No.2 | 0.025 + 0.5 | 10 | 10 | 9 | 10 | 10 | 10 | 9 | 9 | 8 | 0 | 0 |
| (Example | 0.05 + 0.25 | 10 | 10 | 9 | 10 | 10 | 10 | 9 | 9 | 9 | 0 | 0 |
| 1) | 0.05 + 0.5 | 10 | 10 | 10 | 10 | 10 | 10 | 10 | 10 | 10 | 0 | 0 |
| + | 0.1 + 0.25 | 10 | 10 | 10 | 10 | 10 | 10 | 10 | 10 | 10 | 0 | 0 |
| chlorutoluron | 0.1 + 0.5 | 10 | 10 | 10 | 10 | 10 | 10 | 10 | 10 | 10 | 0 | 0 |
| Compound | 0.025 + 0.25 | 9 | 9 | 9 | 6 | 8 | 10 | 7 | 8 | 6 | 0 | 0 |
| No.2 | 0.025 + 0.5 | 10 | 10 | 10 | 10 | 9 | 10 | 8 | 9 | 9 | 0 | 0 |
| (Example | 0.05 + 0.25 | 10 | 10 | 10 | 10 | 10 | 10 | 10 | 10 | 10 | 0 | 0 |
| 1) | 0.05 + 0.5 | 10 | 10 | 10 | 10 | 10 | 10 | 10 | 10 | 10 | 0 | 0 |
| + | 0.1 + 0.25 | 10 | 10 | 10 | 10 | 10 | 10 | 10 | 10 | 10 | 0 | 0 |
| isoproturon | 0.1 + 0.5 | 10 | 10 | 10 | 10 | 10 | 10 | 10 | 10 | 10 | 0 | 0 |
| Example | 0.025 + 0.25 | 9 | 8 | 8 | 7 | 10 | 10 | 7 | 9 | 7 | 0 | 0 |
| 3 | 0.05 + 0.05 | 10 | 10 | 10 | 10 | 10 | 10 | 10 | 10 | 10 | 0 | 0 |
| | 0.1 + 1.0 | 10 | 10 | 10 | 10 | 10 | 10 | 10 | 10 | 10 | 0 | 0 |
| Example | 0.025 + 0.25 | 9 | 9 | 9 | 7 | 8 | 10 | 7 | 9 | 7 | 0 | 0 |
| 4 | 0.05 + 0.5 | 10 | 10 | 10 | 10 | 10 | 10 | 10 | 10 | 10 | 0 | 0 |
| | 0.1 + 1.0 | 10 | 10 | 10 | 10 | 10 | 10 | 10 | 10 | 10 | 0 | 0 |
| Non-treated | | 0 | 0 | 0 | 0 | 0 | 0 | 0 | 0 | 0 | 0 | 0 |

Notes to Table 2

The weeds and crops in the following tables are indicated by the following alphabets A to K.

A: *Alopecurus myosuraides*
B: *Stellaria media*
C: *Viola arvensis*
D: *Veronica persica*
E: *Cerastium glomeratum*
F: *Sinapis arvensis*
G: *Matricaria chamomilla*
H: *Cirsium arvense*
I: *Galium aparine*
J: Wheat
K: barley

TEST EXAMPLE 2

Field test:-

In a field where wheeds, Stellaria media (B), Gallium aparine (I) and Alopecuru myosuraides (A), occur frequently, 120 kg per hectar of wheat (J) seeds (Norin No. 61) and a commercial chemical fertilizer ("Kumiai Rinkaan No. 4") were mingled with the soil, and the field was divided into test areas (2 m x 5 m)

The same chemicals as in Test Example 1 were diluted with 500 ml per area of water so that the amounts of the active components were as indicated in Table 3. The diluted chemicals were each uniformly sprayed over the surface of the soil.

On the 40th day after the treatment with the chemicals, the herbicidal effects on the weeds and the phytotoxicity rate on wheat were evaluated in accordance with the above evaluation standard. The results are shown in Table 3.

Table 3

| Test chemical | Amount of active ingredients (kg/ha) | Weed control rating | | | Phytotoxicity rating |
|---|---|---|---|---|---|
| | | B | I | A | J |
| Example 1 | 0.1 | 9 | 9 | 5 | 0 |
| | 0.2 | 10 | 10 | 7 | 0 |
| chlorotoluron | 1.0 | 4 | 0 | 6 | 0 |
| | 2.0 | 6 | 0 | 10 | 0 |
| isoproturon | 1.0 | 6 | 0 | 9 | 0 |
| | 2.0 | 7 | 1 | 10 | 0 |
| Compound No.2 (Example 1) + chlorotoluron | 0.05 + 0.5 | 10 | 10 | 10 | 0 |
| | 0.05 + 1.0 | 10 | 10 | 10 | 0 |
| | 0.1 + 0.5 | 10 | 10 | 10 | 0 |
| | 0.1 + 1.0 | 10 | 10 | 10 | 0 |
| Compound No.2 (Example 1) + isoproturon | 0.05 + 0.5 | 10 | 10 | 10 | 0 |
| | 0.05 + 1.0 | 10 | 10 | 10 | 0 |
| | 0.1 + 0.5 | 10 | 10 | 10 | 0 |
| | 0.1 + 1.0 | 10 | 10 | 10 | 0 |
| Example 3 | 0.05 + 0.5 | 10 | 10 | 10 | 0 |
| | 0.1 + 1.0 | 10 | 10 | 10 | 0 |
| Example 4 | 0.05 + 0.5 | 10 | 10 | 10 | 0 |
| | 0.1 + 1.0 | 10 | 10 | 10 | 0 |
| Non-treated | | 0 | 0 | 0 | 0 |

[Folia treating agents]

| EXAMPLE 5 | |
|---|---|
| Flowable:- | |
| Compound No. 2 | 10 parts by weight |
| Polyoxyethylene nonyl phenyl ether | 2 parrts by weight |
| Calcium dodecylbenzene sulfonate | 2.5 parts by weight |
| Carboxymethylcellulose | 0.5 part by weight |
| Water | 85 parts by weight |

These ingredients are mixed, and uniformly pulverized and mixed in a wet ball mill until the particles have a diameter of not more than 5 microns, to obtain a flowable.

| EXAMPLE 6 | |
|---|---|
| Wettable powder:- | |
| Compound No. 2 | 0.6 part by weight |
| Isoproturon | 50 parts by weight |
| Calcium ligninsulfonate | 6 parts by weight |
| Sodium laurylsulfate | 4 parts by weight |
| Kaolin clay | 39.5 parts by weight |

The above ingredients are mixed and pulverized by a fluid energy mill to obtain a wettable powder.

| EXAMPLE 7 | |
|---|---|
| Flowable:- | |
| Compound No. 2 | 0.5 part by weight |
| Chlorotoluron | 50 parts by weight |
| Polyoxyethylene nonyl phenyl ether | 2 parts by weight |
| Calcium dodecylbenzenesulfonate | 2.5 parts by weight |
| Carboxymethyl cellulose | 0.5 part by weight |
| Water | 44.5 parts by weight |

These ingredients are mixed, and uniformly pulverized and mixed in a wet ball mill until the particles have a diameter of not more than 5 microns, to obtain a flowable.

| EXAMPLE 8 | |
|---|---|
| Flowable:- | |
| Compound No. 2 | 0.5 part by weight |
| Isoproturon | 50 parts by weight |
| Polyoxyethylene nonyl phenyl ether | 2 parts by weight |
| Calcium dodecylbenzenesulfonate | 2.5 parts by weight |
| Carboxymethyl cellulose | 0.5 part by weight |
| Water | 44.5 parts by weight |

These ingredients are mixed, and uniformly pulverized and mixed in a wet ball mill until the particles have a diameter of not more than 5 microns, to obtain a flowable.

[Foliar treating tests]

TEST EXAMPLE 3

Pot test:-

As in Test Example 1, seeds of the crops and weeds indicated in Table 4 were sown and grown for 40 days at a suitable temperature and water condition.

As test chemicals, the flowable of Examples 5, 7 and 8 and commercial flowable agents of chlorotoluron and isoproturon were used, diluted with a 0.2 % aqueous solution of polyoxyethylene dodecyl ether so that the amounts of the active ingredients were as shown in Table 4, and uniformly sprayed in an amount of 4.5 ml per pot.

On the 20th day after the treatment with the chemicals, the weed control rates on the weeds and the phytotoxicity rates were evaluated according to the evaluation standard shown hereinabove. The results are shown in Table 4.

Table 4

| Test chemical | Amount of active ingredients (kg/ha) | Weed control rating | | | | | | | | | Phytotoxicity rating | |
|---|---|---|---|---|---|---|---|---|---|---|---|---|
| | | A | B | C | D | E | F | G | H | I | J | K |
| Example 5 | 2.5 | 0 | 3 | 4 | 3 | 8 | 8 | 5 | 6 | 6 | 0 | 0 |
| | 5 | 0 | 6 | 8 | 9 | 10 | 10 | 9 | 10 | 9 | 0 | 0 |
| | 10 | 0 | 10 | 10 | 10 | 10 | 10 | 10 | 10 | 10 | 0 | 0 |
| chlorutoluron | 250 | 8 | 2 | 0 | 0 | 3 | 2 | 3 | 4 | 0 | 0 | 0 |
| | 500 | 10 | 7 | 0 | 5 | 6 | 8 | 6 | 6 | 0 | 0 | 0 |
| | 1000 | 10 | 9 | 3 | 8 | 9 | 10 | 10 | 8 | 2 | 0 | 0 |
| isoproturon | 250 | 9 | 3 | 0 | 0 | 2 | 3 | 5 | 5 | 0 | 0 | 0 |
| | 500 | 10 | 6 | 0 | 0 | 5 | 6 | 7 | 8 | 0 | 0 | 0 |
| | 1000 | 10 | 8 | 2 | 4 | 8 | 8 | 10 | 9 | 1 | 0 | 0 |
| Compound No.2 (Example 5) + chlorutoluron | 2.5+250 | 8 | 9 | 6 | 8 | 10 | 10 | 9 | 10 | 7 | 0 | 0 |
| | 2.5+500 | 10 | 10 | 8 | 10 | 10 | 10 | 10 | 10 | 9 | 0 | 0 |
| | 5+250 | 9 | 10 | 10 | 10 | 10 | 10 | 10 | 10 | 10 | 0 | 0 |
| | 5+500 | 10 | 10 | 10 | 10 | 10 | 10 | 10 | 10 | 10 | 0 | 0 |
| | 10+250 | 10 | 10 | 10 | 10 | 10 | 10 | 10 | 10 | 10 | 0 | 0 |
| | 10+500 | 10 | 10 | 10 | 10 | 10 | 10 | 10 | 10 | 10 | 0 | 0 |
| Compound No.2 (Example 5) + isoproturon | 2.5+250 | 9 | 9 | 7 | 4 | 10 | 10 | 10 | 10 | 7 | 0 | 0 |
| | 2.5+500 | 10 | 10 | 9 | 5 | 10 | 10 | 10 | 10 | 10 | 0 | 0 |
| | 5+250 | 10 | 10 | 10 | 10 | 10 | 10 | 10 | 10 | 10 | 0 | 0 |
| | 5+500 | 10 | 10 | 10 | 10 | 10 | 10 | 10 | 10 | 10 | 0 | 0 |
| | 10+250 | 10 | 10 | 10 | 10 | 10 | 10 | 10 | 10 | 10 | 0 | 0 |
| | 10+500 | 10 | 10 | 10 | 10 | 10 | 10 | 10 | 10 | 10 | 0 | 0 |
| Example 7 | 2.5+250 | 8 | 9 | 7 | 8 | 10 | 10 | 9 | 10 | 7 | 0 | 0 |
| | 5+500 | 10 | 10 | 10 | 10 | 10 | 10 | 10 | 10 | 10 | 0 | 0 |
| Example 8 | 2.5+250 | 9 | 10 | 7 | 4 | 10 | 10 | 10 | 10 | 7 | 0 | 0 |
| | 5+500 | 10 | 10 | 10 | 10 | 10 | 10 | 10 | 10 | 10 | 0 | 0 |
| Non-treated | | 0 | 0 | 0 | 0 | 0 | 0 | 0 | 0 | 0 | 0 | 0 |

TEST EXAMPLE 4

Field test:-

In a field where sowing was carried out as in Test Example 2, Chemical treatment was carried out 40 days later. Specifically, the same test chemicals as shown in Test Example 3 were diluted with a 0.2 % aqueous solution of polyoxyethylene dodecyl ether so that the amounts of the active ingredients were as shown in Table 5, and sprayed uniformly each in an amount of 500 ml per area.

On the 30th day after the chemical treatment, the weed control rates on the weeds and the phytotoxicity rate on wheat were evaluated according to the evaluation standards given hereinabove. The results are shown in Table 5.

Table 5

| Test chemical | Amount of active ingredients (kg/ha) | Weed control rating | | | Phytotoxicity rating |
|---|---|---|---|---|---|
| | | B | I | A | J |
| Example 5 | 10 | 7 | 5 | 0 | 0 |
| | 20 | 10 | 10 | 0 | 0 |
| chlorotoluron | 1000 | 2 | 0 | 10 | 0 |
| | 2000 | 6 | 0 | 10 | 0 |
| isoproturon | 1000 | 2 | 0 | 10 | 0 |
| | 2000 | 7 | 0 | 10 | 0 |
| Compound No.2 (Example 5) + chlorotoluron | 5 + 500 | 10 | 10 | 10 | 0 |
| | 5 + 1000 | 10 | 10 | 10 | 0 |
| | 10 + 500 | 10 | 10 | 10 | 0 |
| | 10 + 1000 | 10 | 10 | 10 | 0 |
| Compound No.2 (Example 5) + isoproturon | 5 + 500 | 10 | 10 | 10 | 0 |
| | 5 + 1000 | 10 | 10 | 10 | 0 |
| | 10 + 500 | 10 | 10 | 10 | 0 |
| | 10 + 1000 | 10 | 10 | 10 | 0 |
| Example 7 | 5 + 500 | 10 | 10 | 10 | 0 |
| | 10 + 1000 | 10 | 10 | 10 | 0 |
| Example 8 | 5 + 500 | 10 | 10 | 10 | 0 |
| | 10 + 1000 | 10 | 10 | 10 | 0 |
| Non-treated | | 0 | 0 | 0 | 0 |

## Claims

1. A herbicidal compositon comprising (a) at least one 2-nitro-5-(substituted pyridyloxy)benzohydroximic

acid derivative of the following formula

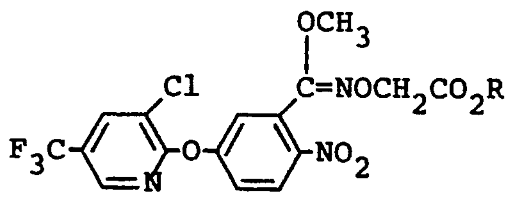

(I)

wherein R represents a lower alkyl group, and (b) at least one urea derivative selected from the group of 3-(3-chloro-4-methylphenyl)-1,1-dimethylurea and 3-(4-isopropylphenyl)-1,1-dimethylurea as active ingredients.

2. The composition of claim 1 in which the amount of component (b) is 0.5 to 100 parts by weight per part by weight of component (a).

3. The composition of claim 2 in which the amount of component (b) is 1 to 30 parts by weight per part by weight of component (a).

4. The compositon of claim 1 which further comprises an agriculturally or horticulturally acceptable adjuvant.

5. The composition of claim 4 which is in the form of a wettable powder, dry flowable, or flowable.

6. The composition of claim 4 which contains components (a) and (b) in a total amount of 0.1 to 99 % by weight.

7. A method of controlling weeds which comprises applying the composition of claim 1 to soil in a locus where weed control is required or to weeds occurring therein.

8. The method of claim 7 in which components (a) and (b) are applied at a total rate of 0.1 to 10 kg per hectar.

9. The method of claim 7 in which the locus is an upland farm where wheat, barley or a similar cereal crops are growing.

10. Use of the composition of claim 1 in controlling main weeds in the cultivation of cereal crops.